(19) **Europäisches Patentamt**

**European Patent Office**

**Office européen des brevets**

(11) **EP 1 681 328 A2**

(12) **EUROPEAN PATENT APPLICATION**

(43) Date of publication:
**19.07.2006 Bulletin 2006/29**

(51) Int Cl.:
***C09J 175/04*** *(2006.01)*

(21) Application number: **06250240.6**

(22) Date of filing: **17.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.01.2005 US 644760 P**

(71) Applicant: **Rohm and Haas Company**
**Philadelphia, PA 19106-2399 (US)**

(72) Inventor: **Weir, James Patrick**
**Miamisburg**
**Ohio 45342 (US)**

(74) Representative: **Kent, Venetia Katherine et al**
**Rohm and Haas (UK) Ltd.**
**European Patent Department**
**4th Floor, 22 Tudor Street**
**London EC4Y 0AY (GB)**

(54) **Water-based flock adhesives for thermoplastic substrates**

(57) Flock adhesive compositions comprising specific polymer dispersions, adhesion promoters and additional emulsion polymers, that optionally include polymerizable surfactant monomers, are able to bond to a wide spectrum of TPE and TPV substrates that conventional flock adhesives have difficulty adhering to.

**EP 1 681 328 A2**

**Description**

This invention relates to water dispersed polymer compositions useful as flocking adhesives. In particular the invention is directed to water-based and aqueous flock adhesives for thermoplastic substrates, including substrates used in vehicle components. In particular, this invention relates to aqueous adhesives using a combination of one or more adhesion promoters, one or more polyurethane dispersions, one or more additives, including phenolic resins, and one or more emulsion polymers, including acrylic resins, to produce an adhesive that adheres to substrates including but not limited to thermoplastic elastomers (TPE) and thermoplastic vulcinizates (TPV) articles and substrates. The adhesive compositions bond well to a wide spectrum of TPE and TPV substrates (high energy to low energy), especially low energy substrates that conventional flock adhesives have difficulty adhering to, including but not limited to polyolefin substrates and polyolefin/rubber composites used in automobile components such as, for example, upholsteries and glass channels.

The automotive industry is shifting from ethylene-propylene-diene-modified (EPDM) rubber substrates and acrylonitrile-butadiene-styrene molded articles to thermoplastic elastomers (TPE) and thermoplastic vulcanizates (TPV) substrates and corresponding articles prepared from them. Polyolefin molded substrates and articles prepared there from have begun to be employed in place of EPDM rubber substrates and ABS resin molded articles for purposes such as reducing the weight of car bodies and saving costs. There is a need for water-based flock adhesives that will adhere to surfaces of TPE and TPV substrates and articles prepared there from for a number of reasons. Unfortunately, conventional water-based flock adhesives prepared from acrylic based emulsion polymers in general do not exhibit good adhesion to TPE and TPV surfaces of low energy or high energy articles/substrates. Likewise, solvent based flocking adhesives also exhibit poor adhesion to surfaces of TPE and TPV articles/substrates and require a primer for the article/substrate or corresponding surface treatment to facilitate or improve adhesion to TPE and TPV. Thermoplastic Vulcanizates are alloys of polyolefin thermoplastics and fully vulcanized rubber. The crosslinked rubber phase in TPVs gives them better compression set and dynamic properties than Styrenics or TPOs.

U.S. Patent Publ. No. 2003/0225216 describes a water-based dispersed resin composition comprising an acrylate ester that contains a monocyclic alkyl group and a water dispersed resin composition of chlorinated polyolefin. In contrast, the present invention uses provides a flock adhesive comprising polyurethane dispersions in combination with an adhesion promoter, one or more emulsion polymers, one or more phenolic resins and one or more vinylacetate/ethylene (VAE) emulsion copolymers. The water-based flock adhesives prepared exhibit unexpectedly good adhesion to a wide variety of high energy and low energy TPE and TPV articles/substrates. The present invention provides a solution to the problems associated with adhesion of conventional flocks to TPE and TPV substrates and provides an effective aqueous flock adhesive composition that can be used for flocking piles on TPE and TPV articles/substrates, including polyolefin containing substrates, without requiring a primer treatment prior to their application. The aqueous flock adhesive composition has improved properties over conventional flock adhesives including improved coatability of the composition, good adhesion between the article/substrate and a coating formed therefrom, abrasion resistance of a flocked coating formed therewith and the pile retention of the coating. The aqueous flock adhesive composition in fact exhibits an excellent balance of properties, including but not limited to adhesive strength, including surface adhesion and cohesive strength of the flocked article/substrate, low to no tack, resistance to shear and water, and combinations thereof.

Accordingly, the present invention is to provide an aqueous flock adhesive composition comprising: (a) one or more adhesion promoters comprising a water based chlorinated polyolefin, (b) one or more polyurethane dispersions, (c) one or more vinyl acetate/ethylene copolymers, (d) one or more phenolic resin dispersions, and (e) one or more other emulsion polymers; the aqueous flock adhesive composition having good adhesion to TPE and TPV articles and substrates (low energy and high energy).

The invention also provides a flocked substrate comprising: (a) an aqueous flock adhesive composition further comprising (i) one or more adhesion promoters comprising a water-based chlorinated polyolefin, (ii) one or more polyurethane dispersions, (iii) one or more vinyl acetate/ethylene copolymers, (iv) one or more phenolic resin dispersions, and (v) one or more other emulsion polymers; and (b) one or more substrates selected from thermoplastic elastomers (TPE), thermoplastic vulcanizates (TPV) and combinations thereof.

The invention also provides a flocked articles comprising: (a) an aqueous flock adhesive composition further comprising (i) one or more adhesion promoters comprising a water-based chlorinated polyolefin, (ii) one or more polyurethane dispersions, (iii) one or more vinyl acetate/ethylene copolymers, (iv) one or more phenolic resin dispersions, and (v) one or more other emulsion polymers; and (b) one or more articles selected from thermoplastic elastomers (TPE), thermoplastic vulcanizates (TPV) and combinations thereof.

The invention also provides a method for preparing an aqueous flock adhesive composition.

The invention also provides a method for preparing a flocked substrate and a flocked article.

As used herein, "aqueous flock adhesive composition" refers to a composition in which an adhesive is dispersed (or suspended) in an aqueous medium, and it also includes a composition in which at least a portion of adhesive is dissolved in an aqueous medium. "Aqueous medium" refers to any kind of water, which includes but is not limited to distilled water, ion-exchange water and pure water. The "aqueous medium" may also include one or more organic solvents.

With the use of the aqueous flock adhesive composition for flocking according to the present invention, it is possible to flock piles on an article and substrate, for example on a polyolefin containing article/substrate, without applying a primer treatment to the article/substrate or without applying a surface modification to the article/substrate in the form of, but not limited to for example, a plasma treatment, chemical abrasion or physical abrasion of the surface. Furthermore, the water dispersed adhesive composition has improved properties over conventional flock adhesives including improved coatability of the composition, good adhesion between the substrate and a coating formed therefrom, abrasion resistance of a flocked coating formed therewith and the pile retention of the coating. The aqueous flock adhesive composition, in fact, exhibits an excellent balance of such important adhesive/adhesion properties.

As used herein, acrylic acid and methacrylic acid are also collectively referred to as "(meth)acrylic acid", and acrylic acid ester and methacrylic acid ester are also collectively referred to as "(meth)acrylic acid ester" or "(meth) acrylate".

"Ethylenically unsaturated monomers" refer to unsaturated monomers that are capable of copolymerizing with the vinyl acetate and ethylene monomers. Suitable examples of the ethylenically unsaturated monomers include the following monomers: (meth)acrylic acid, maleic acid, maleic anhydride, acrylamide, methacrylamide, methyl (meth)acrylate, ethyl (meth)acrylate, isobutyl (meth)acrylate, n-butyl (meth)acrylate, 2-ethyl hexyl (meth)acrylate, dodecyl (meth)acrylate, stearyl (meth)acrylate, benzyl (meth)acrylate, glycidyl (meth)acrylate, styrene, methylstyrene, acrylonitrile and methacrylonitrile.

Component (a) of the water dispersed flock adhesive composition according to the present invention comprises one or more adhesion promoters, including but not limited to for example aqueous and water-based, including water dispersed, chlorinated polyolefin composition. Suitable examples of chlorinated polyolefins include for example chlorinated polyethylene, chlorinated polypropylene, chlorinated polybutene, chlorinated isobutylene, a chlorinated product of an ethylene-propylene copolymer and a chlorinated product of a propylene-1-butene copolymer and combinations thereof.

Chlorinated polyolefins can be obtained by chlorinating, in an organic solvent, a polyolefin such as polyethylene (including low density polyethylene and high density polyethylene), polypropylene (including crystalline polypropylene and amorphous polypropylene), polybutene, polyisobutylene, an ethylene-propylene copolymer, a propylene-1-butene copolymer, an ethylene-propylene-dien copolymer or an ethylene-vinyl acetate copolymer, followed by emulsifying with water and an emulsifier. It is preferable to remove the organic solvent thereafter.

Examples of commercially available aqueous and water dispersed compositions of chlorinated polyolefin include but are not limited to for example Superchlon™ E633, Superchlon™ S-4032 and Superchlon™ S-4044 manufactured by Nippon Paper Industry and Hardlen™ EH202 manufactured by Toyo Kasei Kogyo Co., Ltd.

"Emulsifier" refers to a surfactant that is used for forming an emulsion of an aqueous medium and a monomer mixture. Suitable emulsifiers include but are not limited to, for example, compounds having a sulfonic acid group, a carboxylic acid group, or a phosphonic acid group, compounds having a sulfonate group, compounds having a sulfuric acid ester group or compounds prepared from a mixture thereof. Conventional surfactants are also usefully employed in accordance with the invention. Other examples of such emulsifiers include the following compounds anionic surfactants such as soaps, alkyl sulfonic acid salts and polyoxyethylenealkyl sulfuric acid salts; and nonionic surfactants such as polyoxyalkyl aryl ethers and oxyethylene-oxypropylene block copolymers.

According to an alternative embodiment of the invention, one or more ethylenically unsaturated surfactant monomers are used as an emulsifier, because the resulting emulsion polymers improves, for example, the water resistance of a coating formed from resin compositions for flocking. As used herein, the term "ethylenically unsaturated surfactant monomers" refers to monomers that when added to water reduces the surface tension of water to less than 72 dynes/cm$^2$. The ethylenically unsaturated groups of ethylenically unsaturated monomers used in the present invention are polymerized under conditions of emulsion polymerization described herein and are the aqueous emulsion polymers formed using such monomers are then subsequently used to prepare adhesives of the invention. The surfactant monomers themselves are capable of functioning as an emulsifier in addition to forming an emulsion of an aqueous medium and a monomer mixture when incorporated in the emulsion polymers prepared from them. Examples of such compounds include a compound having a sulfonic acid group, sulfonate group, sulfuric acid ester group or ethylene oxide group with an ethylene double bond between carbon atoms, and a mixture thereof. Additionally, as the counter cations of the sulfonic acid group or sulfonate group of the above-mentioned polymerizable emulsifier, ammonium ions, potassium ions and sodium ions are acceptable.

The ethylenically unsaturated surfactant monomers are surface active agents and are especially useful in emulsion polymerization reactions and are generally capable of co-polymerizing with other ethylenically unsaturated monomers which are conventionally employed in emulsion polymerization reactions, and are capable of polymerizing with themselves, or co-polymerization with a partially polymerized polymer.

Suitable ethylenically unsaturated surfactant monomers include, but are not limited to, for example, salts or quaternary nitrogen compounds comprising at least one acid, wherein the acid is a sulfonic acid, a carboxylic acid, or a phosphoric acid, or a mixture thereof, and at least one nitrogenous base, wherein the nitrogenous base contains at least one nitrogen atom and at least on ethylenically unsaturated moiety. Other suitable examples are described in U. S. Pat. Publ. No. 2003/0149119.

Other suitable polymerizable surfactant monomers include nonylphenoxy propenyl polyethoxylated sulphate (for example as Hitenol™ from Daiichi Corp); sodium alkyl allyl sulphosuccinate (for example as Trem™ LF-40 from Henkel Corp); ammonium di-(tricyclo(5.2.1.0 2, 6) dec-3-en-(8 or 9)oxyethyl) sulfosuccinate; and ammonium di-(tricyclo (5. 2.1.0 2,6) dec-3-en-(8 or 9) sulfosuccinate. Additionally, the ammonium and metal salts of unsaturated $C_6$ to $C_{30}$ organic acids can be used, alone or in combination with the above surfactants. Examples of these acids are: alpha methyl cinnamic acid, alpha phenyl cinnamic acid, oleic acid, lineolic acid (as described in U.S. Pat. No.5,362,832), rincinoleic acid, the unsaturated fraction of Tall oil rosin and fatty acids, disproportionated rosin acid, soybean oil fatty acids, olive oil fatty acids, sunflower oil fatty acids, linseed oil fatty acids, safflower oil fatty acids, sorbitan mono-oleate, abietic acid, poly(oxyethylene) sorbitol sesquioleate, and Empol 1010 Dimer Acid. Additional suitable polymerizable surfactant monomers also include, for example, maleate derivatives (as described in U. S. Pat. No. 4,246,387), and allyl derivatives of alkyl phenol ethoxylates (as described in Japa. Pat. No. 62-227435). The amount of surfactant used is typically from 0.1% to 6% by weight, based on the total weight of monomer.

According to a separate embodiment, an aqueous adhesive is prepared from one or more polymerizable surfactant monomers in an amount from 0.40% to 100% by weight. One example is a homopolymer or copolymer prepared from one or more polymerizable surfactant monomers.

The aqueous flock adhesive also comprises one or more polyurethane dispersions (PUDs). Suitable PUDs include, but are not limited to for example, PUDs having a weight average molecular weight (Mw) between 5,000 and 100,000, including polymers having a Mw between 45,000 and 100,000. According to one embodiment, the urethane dispersion includes one or more higher (Mw > 40,000) molecular weight polymer components. Any suitable thermoplastic polymers are used in accordance with the invention. Suitable examples include but are notlimited to polymers such as (meth)acrylic polymers, copolymers and terpolymers, polyurethane polymers and dispersions (PUDs) and copolymers, polysiloxane polymers, polyesters, polyvinyl polymers, polystyrene (PS), PS copolymers, divinylbenzene polymers and copolymers, copolymers and terpolymers of ethylene, polyetheramides, polyethers and blends of such thermoplastic polymers. Other suitable high molecular weight polymer component include hydroxy functionality of at least one. High molecular weight polymer components having hydroxyl functionality have hydroxyl numbers from > 5. A description of how to determine hydroxyl number for a composition is found in texts well known in the art, for example, G. Woods, The ICI Polyurethanes Book, 2nd Ed., ICI Polyurethanes, Netherlands (1990). Suitable examples include, but are not limited to for example, polyvinylalcohols (PVOH) having Mw less than 20,000, PVOH copolymers, poly(hydroxy)acrylate polymers, polyvinylether/polyvinylacohol copolymers, thermoplastic polymers whose chemical skeletons are derived from a biomass, polymer blends thereof and polymer blends of the thermoplastic polymers having hydroxy functionality and thermoplastic polymers having no hydroxy functionality. The PUD includes one or more high molecular weight polymer components in an amount from 0.1 to 30 percent by weight, based on the total weight of the adhesive composition.

The polyurethane dispersion(PUD) includes one or more multifunctional polyols. The term "multifunctional polyols" refers to polyols bearing at least two hydroxyl groups per chain. Suitable multifunctional polyols include, but are not limited to for example, diols, triols, tetraols, pentaols, hexaols, polyester polyols, polyether polyols, polycarbonate polyols, polyetheramine polyols polymer blends thereof, and mixtures thereof. The multifunctional polyol component is present in amounts from 0.1 to 80 percent by weight, based on the total weight of the polymer used in the PUD. Suitable polyol components include, but are not limited to for example, polymers having a weight average molecular weight (Mw) between 400 and 50,000, including polymers having a Mw between 2,000 and 4,000. Other examples of suitable polyols include oligomers and polymers prepared from hydroxypropanoic acid and other fermentation products of a biomass (e.g. sugars).

Polyester polyols suitable for use in the present invention include those formed from diacids, or their monoester, diester, or anhydride counterparts, and diols. The diacids may be saturated $C_4$-$C_{12}$aliphatic acids, including branched, unbranched, or cyclic materials, and/or $C_8$- Cisaromatic acids. Examples of suitable aliphatic acids include, for example, succinic, glutaric, adipic, pimelic, suberic, azelaic, sebacic, 1,12-dodecanedioic, 1,4-cyclohexanedicarboxylic, and 2-methylpentanedioic acids. Examples of suitable aromatic acids include, for example, terephthalic, isophthalic, phthalic, 4,4'-benzophenone dicarboxylic, 4,4'-diphenylamine dicarboxylic acids, and mixtures thereof. The diols may be $C_2$-$C_{12}$branched, unbranched, or cyclic aliphatic diols. Examples of suitable diols include, for example, ethylene glycol, 1,3-propylene glycol, 1,2-propylene glycol, 1,4- butandiol, neopentyl glycol, 1,3-butandiol, hexanediols, 2-methyl-2,4-pentanediol, cyclohexane-1,4-dimethanol, 1,12-dodecanediol, and mixtures thereof. Other suitable polyester polyols usefully employed in accordance with present invention include polyols prepared from acid dimers and/or dimeric diols. Mixtures of the various suitable polyester polyols are also suitable for use in the present invention.

Polyether polyols suitable for use in the present invention include polyoxy-$C_2$-$C_6$-alkylene polyols, including branched and unbranched alkylene groups. Polyether polyols may be prepared by the reaction of an alkylene oxide with a polyhydric alcohol. Examples of suitable polyether polyols include, for example, polyethylene oxide, poly(1,2- and 1,3-propyleneoxide), poly(1,2-butyleneoxide), random or block copolymers of ethylene oxide and 1,2-propylene oxide, and mixtures thereof. The preferred polyether polyol is polypropylene glycol. The polyether polyol preferably has a weight average molecular weight ("Mw") as measured by gel permeation chromatography, from 400 to 8,000, more preferably from 1,000 to 3,000. Mixtures of the various suitable polyether polyols are also suitable for use in the present invention.

The polyurethane dispersion also may include one or more organic acid compounds having at least two hydroxy groups. Suitable organic compounds having a weight average molecular weight (Mw) between about 100 and 10,000, including polymers having a Mw between about 100 and 5,000. The organic components having at least two hydroxyl functionalities have hydroxyl numbers from 10 to 2000, including hydroxyl numbers from 10 to 1500, from 10 to 1000 and from 10 to 500. Suitable organic compounds include, but are not limited to for example, diols, triols, tetraols, pentaols, hexaols, esters of unsaturated fatty acids, esters of saturated fatty acids, fats, oils, cottonseed oils, linseed oils, olive oils, palm oils, corn oils, peanut oils, soybean oils, and castor oils. Oils include oils modified by hydrogenation and polyoxyalkene polymers, such as polyoxyethylene polymers and include for example hydrogenated oils, partially hydrogenated oils, and polyoxyethylene oils. The amount of the organic component having at least two hydroxyl functionalities is between 1 and 15 % by weight, based on the weight of the polymer composition.

The polyurethane dispersion also may include one or more polyisocyanates bearing at least two isocyanate groups. Suitable polyisocyanates include but are not limited to for example aromatic, aliphatic, cycloaliphatic polyisocyanates and combinations thereof, such as, for example, m-phenylene diisocyanate, 2,4-toluene diisccyanate, 2,6- toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 4,4'- diphenylmethane diisocyanate, 2,4'-diphenylmethane diisocyanate, 4,4'-biphenylene diisocyanate, 3,3'- dimethoxy-4,4'-biphenyl diisocyanate, 3,3'-dimethyl-4,4'-biphenyl diisocyanate, 3,3'-dimethyl- 4,4'-diphenylmethane diisocyanate, isophorone diisocyanate, 4,4',4"-triphenylmethane triisocyanate, 1,3,5-triisocyanato benzene, 2,4,6- triisocyanato toluene, 4,4'-dimethyldiphenylmethane-2,2',5,5'-teratisocyanate, polymethylene polyisocyanate, polyphenylene polyisocyanate, 2,4,6-toluene triisocyanate, 4,4'-dimethyl-diphenylmethane tetraisocyanate, pre-polymers having number average molecular weights Mn less than 2000 and bearing at least two isocyanate groups, and mixtures thereof. The polyisocyanate component is present in amounts from 1 to 30 percent by weight, based on the total weight of the polymer composition.

The ratio of isocyanate groups to hydroxyl groups (NCO/OH) groups from all of the admixed components of the polyurethane dispersion taken on an equivalents basis is between 2.1 and 6.0, including from 2.2 to 4.0, including greater than 3.0 and including 3.5 or greater; in order to provide an adhesive composition with an excess of isocyanate groups.

The components of the polyurethane dispersion are mixed by conventional means, preferably in an inert, dry atmosphere, and reacted, preferably at a temperature of 50°C to 120°C, for a time sufficient to convert essentially all hydroxy groups to corresponding urethane groups. The polymer components are solubilized by heating and mixing with at least one of the non-isocyanate containing components before the reaction with the polyisocyanate. Optionally, a catalyst such as, for example, a tertiary amine or a tin-based catalyst may be admixed with the components, before the reaction to form the flock adhesive composition. After the pre-polymer is formed in an initial reaction, the polymer is then transferred to a vessel equipped with a high speed disperser and is dispersed into water, where chain extenders and chain terminating compounds or materials may react with the remaining or unreacted isocyanate groups, producing the final PUD. Also present in the water during dispersion phase are tertiary amines that may react with the organic acid groups to stabilize the PUD.

The aqueous flock adhesive of the invention comprises one or more emulsion polymers prepared from ethylenically unsaturated monomers. According to one embodiment, aqeous emulsion polymers and dispersions thereof disclosed in U.S. Pat. No. 5,665,816 are used; namely the polymerization of vinyl acetate, ethylene, and other related copolymers including various ethylenically unsaturated co-monomers in the presence of unsaturated carboxylic acid to form copolymers having a glass transition temperature of -60° C. to 40° C. and comprising a cellulose ether in at least partly grafted form. The unsaturated carboxylic acid and cellulose ether are present throughout the polymerization reaction.

The emulsion polymer further comprises at least one copolymerized ethylenically unsaturated monomer. Ethylenically unsaturated monomers include, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate; hydroxyethyl (meth)acrylate and hydroxypropyl (meth)acrylate; (meth)acrylamide; (meth) acrylonitrile; styrene and substituted styrenes; butadiene; vinyl acetate, vinyl butyrate and other vinyl esters; and vinyl monomers such as ethylene, vinyl chloride, vinylidene chloride. The use of the term "(meth) " followed by another term such as acrylate or acrylamide, as used throughout the disclosure, refers to both acrylates or acrylamides and methacrylates and methacrylamides, respectively.

The polymer may contain from 0 to 5%, preferably from 0. 5 to 2%, by weight based on polymer weight, of a copolymerized monoethylenically-unsaturated acid-group containing monomer, based on the weight of the polymer, such as, for example, acrylic acid, methacrylic acid, crotonic acid, itaconic acid, fumaric acid, maleic acid, monomethyl itaconate, monomethyl fumarate, monobutyl fumarate, maleic anhydride, sulfoethyl methacrylate, and phosphoethyl methacrylate. The emulsion polymer may contain from 0 to 5%, preferably from 0 to 2%, by weight based on polymer weight, of a copolymerized monoethylenically- unsaturated amino-group containing monomer, based on the weight of the polymer, such as, for example, diethylaminoethyl (meth)acrylate and t- butylaminoethyl (meth)acrylate. The emulsion polymer may contain from 0% to 1%, by weight based on polymer weight, copolymerized multi- ethylenically unsaturated monomers such as, for example, allyl methacrylate, diallyl phthalate, 1,4-butylene glycol dimethacrylate, 1,2- ethylene glycol dimethacrylate, 1,6-hexanediol diacrylate, and divinyl benzene.

The glass transition temperature ("Tg") of the emulsion polymer is preferably from -40° C. to 85° C., more preferably from -10° C. to 40° C., as measured by differential scanning calorimetry (DSC) taking the mid- point in the heat flow versus temperature transition as the Tg value, the monomers and amounts of the monomers being selected to achieve the desired polymer Tg range as is well known in the art.

The polymerization techniques used to prepare the emulsion polymer are well known in the art. In the emulsion polymerization process conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is typically 0.1°/ to 6% by weight, based on the weight of monomer. The monomer may be added neat or as an emulsion in water. The monomer may be added in one or more additions or continuously, linearly or not, over the reaction period , or combinations thereof.

Either thermal or redox initiation processes may be used in the preparation of the emulsion polymer. Conventional thermal free radical initiators may be used such as, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01% to 3.0% by weight, based on the weight of total monomer. "Redox systems" herein are oxidant+reducing agent combinations effective to generate free radicals, including the same free radical initiators listed hereinabove as oxidant and a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, lactic acid, glyceric acid, malic acid, tartaric acid and salts of the preceding acids may be used. Redox reaction catalyzing metal salts of iron, copper, manganese, silver, platinum, vanadium, nickel, chromium, palladium, or cobalt may optionally be used. The initiator or initiator system may be added in one or more additions or continuously, linearly or not, over the reaction period, or combinations thereof.

Chain transfer agents such as, for example, halogen compounds such as tetrabromomethane; allyl compounds; or mercaptans such as alkyl thioglycolates, alkyl mercaptoalkanoates, and $C_4$ -$C_{22}$ linear or branched alkyl mercaptans may be used to lower the molecular weight of the formed polymer and/or to provide a different molecular weight distribution than would otherwise have been obtained with any free- radical-generating initiator(s). Linear or branched $C_4$ -$C_{22}$ alkyl mercaptans such as n-dodecyl mercaptan and t-dodecyl mercaptan are preferred. Chain transfer agent(s) may be added in one or more additions or continuously, linearly or not, coordinated with the monomer addition or not, over most or all of the entire reaction period or during limited portion(s) of the reaction period.

The polymerization reaction temperature is typically maintained at a temperature lower than 100° C. throughout the course of the reaction to form the emulsion polymer. Preferred is a reaction temperature between 30° C. and 95° C., more preferably between 40° C. and 90° C. The emulsion polymerization of first monomer to provide the emulsion polymer is carried out such that the conversion of first monomer to emulsion polymer is at least 95%, by weight, as may be determined, for example, by a gravimetric method or gas chromatography, before subsequent treatment of the emulsion polymer is effected. The amount of first monomer not converted to emulsion polymer is termed "the residual monomer of the emulsion polymer" herein.

The average particle diameter of the emulsion polymer particles is preferred to be from 10-5000 nanometers, more preferably from 50-1000 nanometers, as measured by a BI-90 Particle Sizer.

The emulsion polymer is subsequently treated with 0.01-6%, preferably 0.1-5%, preferably 0.25-3%, by weight, based on the weight of the emulsion polymer, of a colloidal stabilizer, 0.01-10%, preferably 1-10%, more preferably 2.4-6%, by weight, based on the weight of the emulsion polymer, of at least one second ethylenically unsaturated monomer, and 0.05-0.35%, by weight, based on the weight of the emulsion polymer, of a redox system at 20-85° C., preferably at 55-75° C., until at least 90% of the sum of the residual monomer of the emulsion polymer and the second monomer has been converted to polymer, as may be determined, for example, by a gravimetric method or gas chromatography. It is believed that the effect of the treatment of the emulsion polymer is to attach or graft some or all of the colloidal stabilizer to the surface of the emulsion polymer particles, thereby beneficially modifying the emulsion polymer so formed and enhancing the viscosity and rheological properties of aqueous coating compositions containing the emulsion polymer. Formation of the emulsion polymer of this invention is taken herein as indicated by a higher viscosity measured at 12,000 sec $^{-1}$, such as ICI viscosity, of an aqueous coating composition containing the emulsion polymer, in contrast to a that of a blend of an untreated emulsion polymer and the same amount of the same colloidal stabilizer.

By "colloidal stabilizer" herein is meant a nonionic molecule which is an effective agent for protecting charged colloidal particles in aqueous media against flocculation. Also known in the art as protective colloids, colloidal stabilizers have a weight average molecular weight between 1000 and 300,000 and are typically more hydrophilic than the composition of the emulsion polymer, as measured by weight-averaged solubility parameters. Colloidal stabilizers known in the art include, for example, hydroxyethyl cellulose, preferably having a weight average molecular weight between 50,000 and 150,000; N-vinyl pyrrolidone; polyvinyl alcohol, preferably having a weight average molecular weight between 10,000 and 200,000; partially acetylated polyvinyl alcohol carboxymethyl cellulose; gums such as gum arabic; starches; proteins; and mixtures thereof. Preferred as colloidal stabilizer is hydroxethyl cellulose or polyvinyl alcohol.

The second ethylenically unsaturated monomer(s) are monoethylenically unsaturated monomers such as those monoethylenically unsaturated monomers disclosed hereinabove as first ethylenically unsaturated monomers. Preferred second ethylenically unsaturated monomers are ethyl acrylate and butyl acrylate, mixtures thereof, and mixtures of monomers containing greater than 30 wt. % ethyl acrylate or butyl acrylate.

The redox systems used in the treatment of the emulsion polymer include an oxidant and a reductant such as, for example, those disclosed hereinabove as suitable for the polymerization of the emulsion polymer.

The treatment of the emulsion polymer may be carried out in a batch, semi-continuous, or a continuous reactor or vessel including but not limited to the reactor or vessel in which the emulsion polymer was formed. Preferred is the treatment of the emulsion polymer in a second reactor, drain tank, storage tank, or the like so as to free the first polymerization reactor or vessel for further production. The site of the treatment of the emulsion polymer according to this invention is less constrained than the selection of the reactor for the polymerization of the emulsion polymer as the temperature required for the treatment including the redox system is generally lower that that found most desirable for the polymerization of the major part of the monomer and because the amount of heat generated during the treatment step is much lower that generated during the polymerization of the major part of the monomer.

The water dispersed flock adhesive composition according to the present invention comprises the above-described components (a)-(e), and can be obtained by mixing, including admixing, the components. According to one embodiment, at the time of mixing, it is useful to add a viscosity modifier to modify the viscosity or one or more viscosity modifiers are added prior to applying the flock adhesive to the surface of the article/substrate. "Mixing" refers to any methods that are commonly used for mixing and admixing polymer compositions, and there is no particular limitation to the methods.

Additionally, "viscosity modifier" refers to modifiers that are commonly used to modify the viscosity of resin compositions, and there is no particular limitation to the viscosity modifier employed in accordance with the invention. Suitable examples of the viscosity modifiers include, but are not limited to, alkali thickening-type modifiers such as Yodosol™ KA-10 manufactured by Nippon NSC Ltd. and association-type modifiers such as Adekanol™ UH438 manufactured by Asahi Denka Co. Ltd.

The solids content ratio ((a)/(c)) of the component (a) to the component (c) of the water dispersed flock adhesive composition for flocking is preferably 40 to 80/60 to 20, more preferably 45 to 70/55 to 30 and most preferably 50 to 60/50 to 40. When the component (a) is less than 40 parts by weight (i.e., when the component (c) is more than 60 parts by weight), the pile retention of a coating formed from the water dispersed resin composition for flocking and the abrasion resistance of a flocked coating formed on the coated layer of the water dispersed resin composition for flocking may decrease. When the component (a) is more than 80 parts by weight (i.e., when the component (c) is less than 20 parts by weight), the adhesion between a coating formed from the water dispersed resin composition for flocking and the substrate may decrease.

As used herein, "solid contents" of the components (a)-(c) refer to residues obtained by heating each of the components, which are water dispersed resin compositions, at specified temperatures for a specific duration of time.

Additionally, "concentration" of the component (a)-(c) refer to the percentages of the respective masses (solid content) of the components (A) after they are heated to obtain polymer solids or "solid contents", with respect to the mass of the components (a)-(c) before they are heated.

The viscosity of the water dispersed resin composition for flocking according to the present invention obtained as above is preferably 100 to 5000 mPa/s, more preferably 100 to 1000 mPa/s and most preferably 300 to 800 mPa/s, when measured by a Brookfield type rotational viscometer (Spindle No. 2) at 100 rotations per minute (rpm) When the viscosity is less than 100 mPa/s, a coating, which is formed by coating the water dispersed resin composition for flocking on the substrate, may not have the desired thickness. In this specification, "viscosity" refers to a value measured according to the "Brookfield rotational viscometer method".

When the viscosity is more than 5000 mPa/s, the flock fibers may not be able to penetrate the adhesive film to a desired depth and the coatability of the water dispersed flock adhesive composition for flocking on the substrate may decrease. As is discussed below, examples of the methods of coating the water dispersed resin composition for flocking on a polyolefin substrate include a doctor knife coater, a roll coater and a spay coater. However, each of these coating methods may reduce the leveling properties of the coating, thereby possibly making it difficult to apply the water dispersed resin composition for flocking on the substrate in uniform thickness.

The thixotropy index (hereinafter also referred to as "TI") of the water dispersed resin composition for flocking according to the present invention is preferably 1.5 to 6.0, more preferably 1.8 to 4.0 and most preferably 2.0 to 3.0.

When the TI is less than 1.5, a coating formed from the resin composition may not have the desired thickness because of the high fluidity of the resin composition at the time of coating. On the other hand, when the TI is more than 6.0, the leveling properties of the coating are decreased and a coating of uniform thickness may not be obtained, because of the low fluidity of the resin composition at time of coating.

In this specification, "TI" refers to a value obtained by dividing a viscosity (hereinafter also referred to as "viscosity (6 rpm)") measured by the same viscosity method as described above except for rotating the spindle at 6 rpm, by the above-described viscosity (hereinafter also referred to as "viscosity (60 rpm)") measured when rotating the spindle at 60 rpm. Equation (1) for this TI is shown below.

$$\mathrm{TI=viscosity\ (6\ rpm)/viscosity\ (60\ rpm)} \qquad \text{Equation (1)}$$

The above-described aqueous composition for flocking can be directly used as a water dispersed resin composition (or as an adhesive) for flocking other substrates and articles, and may include additional additives, including but not limited to for example, a disinfectant, antiseptic, anti-foamer, plasticizer, fluidity adjusting agent, thickener, pH adjusting agent, surfactant, pigment, rust preventive, humectant, silane coupling agent or cross-linking agent may be added, as necessary.

The aqueous adhesive composition for flocking according to the present invention is coated on a substrate, and piles are flocked on a layer of the coated composition at the same time with and/or after the application of the resin composition. The flocked layer or part is then subjected to an oven cure where the layer/part temperature reaches temperatures ranging from 70° to 180° C for 30 to 240 seconds (s) so that the flock adhesive composition can be dried and cured. For TPE and TPV articles/substrates one optimium cure temperature is from 100° to 150° C in order to prevent the TPE/TPV article/substrate from deforming, including inelastic deformation, and distorting.

The water dispersed resin composition for flocking can be coated by any method commonly used for coating resin compositions on substrates. For example, it can be coated on a polyolefin substrate by a spray coater, a doctor knife coater, a roll coater, brush or a wire coater.

The coating amount in terms of dry film thickness of the water dispersed resin composition for flocking on the article/substrate is preferably 30 to 160 $\mu$m, including from 50 to 140 $\mu$m and 80 to 140 $\mu$m.

As the method for flocking on a substrate on which the water dispersed resin composition for flocking according to the present invention is coated, it is possible to use any methods that are commonly used for flocking on substrates without any particular limitation. Examples of such methods include spray coating the resin composition together with piles and electrostatic flocking. Spray coating the resin composition together with piles allows the plies to easily penetrate into an adhesive layer, thereby making it possible to decrease the coating amount of the adhesive. On the other hand, the use of electrostatic flocking is preferable in that individual piles stand erect and adhere to an adhesive coating (coated layer) on the surface to which they are flocked, without any gaps there between.

As used herein, the terms "article" and "substrate" refer, respectively, to any commonly used article and substrate on which the resin composition for flocking can be coated and piles can be flocked, and there is no particular limitation. Suitable examples of "articles" include, but are not limited to any thermoplastic articles such as plastic articles, polyolefin articles and ABS resin articles, and fibers; wherein the articles are in the form of shapes including but not limited to for example molded articles, thermoset articles, shaped articles, extrudates and combinations thereof. Suitable examples of "substrate" include, but are not limited to any thermoplastic elastomeric (TPE) substrates such as plastic substrates, polyolefin substrates and ABS resin substrates, polyolefin containing TPEs, TPVs, ethylene propylene diene rubbers and fiber substrates. The water dispersed resin composition for flocking according to the present invention can also preferably be used for polyolefin substrates that have not been treated with a primer or other surface modifications including plasma treatment and abrasion. "Polyolefin substrates" refer to substrates manufactured using resins that are commonly called polyolefins. Examples include substrates obtained by processing polyolefins, such as polyethylenes, polypropylenes and ethylene-propylene copolymers, into molded articles. Further examples include polyolefin substrates blended with fillers, such as glass fibers, calcium carbonate and talc, as well as polyolefin substrates modified with polymers, such as polycarbonate, polystyrene, acrylonitrile-styrene copolymers, polymethyl methacrylate, polyphenylene oxide, nylon, polyester, ABS resins and rubbers.

"Piles" may be any commonly used piles, and there is no particular limitation. Examples of piles include the following: natural fibers such as cotton, wool and hemp; wool fibers such as rayon and protein fibers; synthetic fibers such as polyurethane fibers, polyvinyl chloride fibers, polyvinyl alcohol fibers, polyvinylidene chloride fibers, polyester fibers, polyamide (nylon) fibers, acrylonitrile polymer fibers and acrylonitrile copolymer fibers and polyolefin fibers; and textiles products obtained by blending the above-mentioned fibers, such as woven fabrics and nonwoven fabrics.

The water dispersed flock adhesive composition for flocking according to the present invention has been improved in at least one property selected from the coatability, the adhesion of a coating formed therefrom to a substrate, the abrasion resistance of a flocked coating formed therewith and the pile retention of the coating, and it is well balanced in these properties.

In this specification, "coatability" refers to the ability of a composition to be generally evenly coated on the substrate in uniform thickness. More specifically, it refers to the ease of spreading when the flock adhesive is applied with a brush when applying the water dispersed flock adhesive composition for flocking on a polyolefin substrate. Whether or not the composition is generally evenly coated in uniform thickness is evaluated by visual inspection.

In this specification, adhesion or adhesive strength refers to the adhesion between a coating and a polyolefin substrate, measured by a peel test. Specifically, a flocked and cured polyolefin surface is cut to the appropriate dimensions and placed in a metal fixture, exposing a 9-10 mm wide strip. To this exposed strip, a bead of hot melt, wax or epoxy adhesive was applied and allowed to cool. After cooling, the test pieces are pulled apart using a tensile testing machine.

It is preferable that the peel adhesion evaluation have values greater than 10 N/cm, which is an industry specified value for EPDM rubber extrusions.

In this specification, "abrasion resistance" refers to the abrasion resistance of a flocked coating, measured by a Ford Crock test, specified in FLTM BP 107-01. Specifically, a cylindrically-shaped object weighing 900 grams is covered with a cotton cloth and then placed onto a flocked sample and the cylinder is oscillated back and forth across the flocked sample for 1000 cycles and the abraded surface is evaluated on an abrasion scale of 1-6, wherein 1 indicates no observed removal of the flock by visual inspection and wherein 6 indicates extensive to complete flock removal, including destruction of the film by visual inspection. The desired performance score is an abrasion rating of 3 or less, with 1 being optimal. Additional crock testing can be done were the flocked area can be exposed to solvents, soap solutions and other cleaners specified by users and manufacturers of the flocked adhesives.

The solids content of the aqueous flock adhesive composition may be from 30% to about 70% by volume. The viscosity of the aqueous composition may be from 0.05 to 10 Pa.s (50 cps to 10,000 cps), as measured using a Brookfield viscometer; the viscosities appropriate for different application methods vary considerably.

The aqueous flock adhesive composition may applied by conventional application methods such as, for example, application with a brush or a paint roller, roll coating, doctor-blade application, printing methods, air-atomized spray, air-assisted spray, airless spray, high volume low pressure spray, brush, and air-assisted airless spray.

The aqueous composition may be applied to a substrate for decorative, protective, adhesive, etc. effect on substrates such as, for example, plastic, polymeric films, reconstituted plastic products, ABS resins, rubber and rubber/polymer substrates, cured rubber or the like, with or without a prior substrate treatment such as an acid etch, corona discharge, plasma treatment, or a primer.

According to one embodiment, the aqueous composition coated on the substrate is typically dried, or allowed to dry, at a temperature from 80° C. to 150° C.

The following examples are presented to illustrate the invention and the results obtained by the test procedures.

Based upon the test results, it appears that formulation is the best performing adhesive for the TPE/TPV compound, and that the mix ratio with the cross-linker can range between 10:1 and 20:1 and still give passing results versus the Ford and Chrysler Testing. Also with the TPE compound used, it appears that primers and pretreatment such as plasma treatment are not need to give acceptable performance.

**Trial Conditions and Test Results:**

A trial was held using two versions of the TPE Flock Adhesive. One adhesive showed better peel strength in lab testing while the other formulation showed better crock resistance. Two levels of cross linker were used to see the variation in performance. No primer or pretreatment was used on the TPE compound and the line speed was 5 m/min and the oven length consisted of 3 - 3.7m zones resulting in a cure time of 2.2 minute and the peak surface temperature by IR was between 137°C and 116°C. (Note: Temperatures were reduced from the 130°C levels due to distortion of the extrusion). Summary of sample conditions are in Table 1.

The performance of the two adhesive were drastically different with material showing overall better performance versus comparative examples in both peel strength and crocking resistance. It is important to note that the crock performance for Naphtha and Soap showed no deterioration.

After completing the baseline Ford Testing of Peels and Crock Testing, the samples were exposed to Chrysler's Heat Aging and Water Immersion Testing. The results of this testing showed that certain examples still had better performance with the Peel Strength deteriorating only 11-15% for some tests and showing no significant change in Peel Strength in other test. However, for K004 it appears the exposure testing caused improvement in performance but still performance was lower than K003 (Test results are summarized in Table 2).

Table 1: Operating Conditions for November Trial at CSA

| Sample ID | Formulation Number | Mix Ratio with Cross-linker | DFT (microns) | Surface Temperature After Zone 1 (°C) | Surface Temperature After Zone 2 (°C) | Surface Temperature After Zone 3 (°C) |
|---|---|---|---|---|---|---|
| A | K003 | 10:1 | 60 | 110 | 119 | 130 |
| A1 | K003 | 10:1 | 90 | 110 | 119 | 130 |
| B | K003 | 20:1 | 75 | 110 | 127 | 137 |
| B1 | K003 | 20:1 | 62 | 110 | 127 | 137 |
| B2 | K003 | 20:1 | 86 | 104 | 106 | 116 |
| C | K004 | 10:1 | 68 | 108 | 114 | 122 |
| C1 | K004 | 10:1 | 90 | 105 | 110 | 118 |
| D | K004 | 20:1 | 70 | 113 | 119 | 123 |
| D1 | K004 | 20:1 | 98 | 113 | 119 | 123 |

Table 2: Adhesive Performance Testing

| Sample ID | Crocks | | Peel Strength** (PLI) | | | | | |
|---|---|---|---|---|---|---|---|---|
| | Soap (Total Cyles)* | Naphtha (Total Cycles)* | BASELINE (MS AK87 Requirement 5.7 PLI) | Baseline at 180° Peel (MS AK87 Requirement 5.7 PLI) | HEAT AGE 8 hrs at 125°C (MS AK87 Requirement 5.7 PLI) | HEAT AGE 7 d at 82°C (MS AK87 Requirement 5.7 PLI) | WATER IMMERSION 24 hrs. @ 70C (MS AK87 Requirement 4.0 PLI) | WATER IMMERSION 4 d at 80C |
| A | 1,1,1,1,1,1,1,1,1,1 (1000) | 1,1,1,1,1,1,1,1,1,1 (1000) | 7.6 | 8.2 | 6.9 | 7.7 | 7.7 | 6.5 |
| A1 | 1,1,1,1,1,1,1,1,1,1 (1000) | 1,1,1,1,1,1,1,1,1,1 (1000) | 7.1 | 7.9 | 5.9 | 7.7 | 7.6 | 6.5 |
| B | 1,1,1,1,1,1,1,1,1,1 (1000) | 1,1,1,1,1,1,1,1,1,1 (1000) | 6.0 | 8.1 | 6.0 | 6.7 | 7.5 | 6.7 |
| B1 | 1,1,1,1,2,2,3,3,4,4 (1000) | 1,1,1,1,1,1,1,1,1,1 (1000) | 6.5 | 8.1 | 6.8 | 6.2 | 7.4 | 6.6 |
| B2 | 1,1,1,2,2,3,3,4,4,4 (1000) | 1,1,1,1,1,1,1,1,1,1 (1000) | 6.3 | 6.9 | 6.4 | 7.0 | 7.1 | 6.5 |
| C | 1,1,1,1,2,2,3,4,4,4 (1000) | 1,1,1,1,1,1,1,1,1,1 (1000) | 4.7 | NT | 5.2 | 5.1 | 5.4 | 5.0 |
| C1 | 1,1,1,1,2,2,3,4,4,4 (1000) | 1,1,1,1,1,1,1,1,1,1 (1000) | 3.0 | NT | 5.7 | 5.7 | 5.3 | 5.1 |
| D | 1,1,2,3,4,4 (680) | 1,1,1,1,1,1,1,1,1,1 (1000) | 5.3 | NT | 5.5 | 5.3 | 5.9 | 3.9 |
| D1 | 1,1,1,1,2,2,3,4,4,4 (1000) | 1,1,1,1,1,1,1,1,1,1 (1000) | 4.8 | NT | 5.1 | 5.3 | 6.4 | 5.9 |

*Crock Testing is for 1000 cycle and should be rated 1-3 for passing. Crocking was rated after every 100 cycles until failure.

** Unless stated all peels were tested at 90°

Note: Peels were tested at 180° and 90°. The baseline values for K003 were retested at 180° and the Peel values increased 8-10% for the 10:1 ratio and 3.3 to 34% for the 20:1 ratio samples. This indicates that at 180° testing of peel strength would result in higher test results for the environmental exposure testing.

**Claims**

1.  An aqueous flock adhesive composition comprising: (a) one or more adhesion promoters comprising a water based chlorinated polyolefin, (b) one or more polyurethane dispersions, (c) one or more vinyl acetate/ethylene copolymers, (d) one or more phenolic resin dispersions, and (e) one or more other emulsion polymers; the aqueous flock adhesive composition having good adhesion to TPE and TPV articles and substrates.

2. The aqueous flock adhesive of claim 1 wherein the TPE substrates are selected from the group consisting of polyolefin such as polyethylene (including low density polyethylene and high density polyethylene), polypropylene (including crystalline polypropylene and amorphous polypropylene), polybutene, polyisobutylene, an ethylene-propylene copolymer, a propylene-1-butene copolymer, an ethylene-propylene-dien copolymer or an ethylene-vinyl acetate copolymer, plastic substrates, fiber substrates, polyolefin substrates blended with fillers, such as glass fibers, as well as polyolefin substrates modified with polymers, such as polycarbonate, polystyrene, acrylonitrile-styrene copolymers, polymethyl methacrylate, polyphenylene oxide, nylon, polyester, ABS resins and rubbers.

3. The aqueous flock adhesive of claim 1, wherein the thermoplastic elastomeric and thermoplastic vulcanizate article and substrates have not been treated with a primer or by surface modifcation.

4. The aqueous flock adhesive of claim 1, further comprising one or more cross-linking agents.

5. The aqueous flock adhesive of claim 1, further comprising a cross-linking agent blended into the flock adhesive at a mix ratios selected from the group consisting of: 2 parts flock adhesive:1 part cross-linking agent to 50 parts flock adhesive: 1 part cross-linking agent, 4 parts flock adhesive adhesive:1 part cross-linking agent to 30 parts flock adhesive: 1 part cross-linking agent and between ranges of 8 parts flock adhesive:1 part cross-linking agent to 20 parts flock adhesive: 1 part cross-linking agent.

6. The aqueous flock adhesive of claim 5, wherein the cross-linking agent is selected from the group consisting of: isocyanates, carbodiimides, oxazolidine functional polymers, poly azeridines, azeridines, epoxies, silane melamine formaldyhyde resins and blocked isocyanate cross-linkers; and wherein the cross-linking agents are in the form of water dispersible, waterborne dispersions, solvent or 100% solids materials.

7. The aqueous flock adhesive of claim 1, wherein the flock adhesive is modified with additional adhesion promoters based upon nitrogen containing substances selected from p-dinitrosobenzene, quinone dioxime, dinitrosbenzene and other related nitrogen containing substances.

8. A flocked substrate comprising: (a) an aqueous flock adhesive composition further comprising (i) one or more adhesion promoters comprising a water-based chlorinated polyolefin, (ii) one or more polyurethane dispersions, (iii) one or more vinyl acetate/ethylene copolymers, (iv) one or more phenolic resin dispersions, and (v) one or more other emulsion polymers; and (b) one or more substrates selected from thermoplastic elastomers (TPE), thermoplastic vulcanizates (TPV) and combinations thereof.

9. A flocked article comprising: (a) an aqueous flock adhesive composition further comprising (i) one or more adhesion promoters comprising a water-based chlorinated polyolefin, (ii) one or more polyurethane dispersions, (iii) one or more vinyl acetate/ethylene copolymers, (iv) one or more phenolic resin dispersions, and (v) one or more other emulsion polymers; and (b) one or more articles selected from thermoplastic elastomers (TPE), thermoplastic vulcanizates (TPV) and combinations thereof.